Europäisches Patentamt

European Patent Office

Office européen des brevets

(19)

(11) **EP 0 824 386 B1**

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(21) Anmeldenummer: **96909968.8**

(22) Anmeldetag: **10.04.1996**

(51) Int. Cl.$^6$: **B22D 11/16**, B22D 11/20, G01L 5/00, B22D 11/04

(86) Internationale Anmeldenummer:
**PCT/DE96/00683**

(87) Internationale Veröffentlichungsnummer:
**WO 96/33035 (24.10.1996 Gazette 1996/47)**

(54) **VERFAHREN ZUM BETREIBEN EINER OSZILLIEREND ANGETRIEBENEN KOKILLE UND STRANGGIESSEINRICHTUNG ZUR DURCHFÜHRUNG DES VERFAHRENS**

PROCESS FOR OPERATING AN OSCILLATED CASTING MOLD AND CONTINUOUS CASTING DEVICE FOR CARRYING OUT SAID PROCESS

PROCEDE PERMETTANT D'ACTIONNER UNE COQUILLE ENTRAINEE PAR OSCILLATIONS ET DISPOSITIF DE COULEE CONTINUE POUR METTRE LEDIT PROCEDE EN OEUVRE

(84) Benannte Vertragsstaaten:
**AT DE FR GB IT**

(30) Priorität: **19.04.1995 DE 19515316**

(43) Veröffentlichungstag der Anmeldung:
**25.02.1998 Patentblatt 1998/09**

(73) Patentinhaber:
**MANNESMANN Aktiengesellschaft
40213 Düsseldorf (DE)**

(72) Erfinder:
• **WOCHNIK, Jürgen
D-47058 Duisburg (DE)**
• **STEIN, Johannes
D-40213 Düsseldorf (DE)**

(74) Vertreter: **Henze, Lothar et al
Meissner & Meissner,
Patentanwaltsbüro,
Hohenzollerndamm 89
14199 Berlin (DE)**

(56) Entgegenhaltungen:
EP-A- 0 044 291    EP-A- 0 124 362
AT-A- 367 328    US-A- 3 893 502
US-A- 4 615 375

• PATENT ABSTRACTS OF JAPAN vol. 10, no. 216 (M-502) [2272] , 29.Juli 1986 & JP,A,61 052972 (NIPPON KOKAN K.K.)
• PATENT ABSTRACTS OF JAPAN vol. 10, no. 216 (M-502) [2272] , 29.Juli 1986 & JP,A,61 052973 (NIPPON KOKAN K.K.)

**Beschreibung**

Die Erfindung betrifft ein Verfahren zum Betreiben einer geführten, vertikal angeordneten Kokille, insbesondere zum Gießen von Stahl, die über eine Hubeinrichtung oszillierend angetrieben wird, sowie einer entsprechenden mit Elementen zum Messen und Regeln der Kokillenhubbewegung versehene Stranggießeinrichtung.

Aus EP 0 044 291 A1 ist eine Einrichtung mit einer oszillierenden Stranggießkokille zum Ermitteln der zwischen den Seitenwänden der Kokille und der Strangoberfläche herrschenden Reibungskräfte bekannt, bei der die Kokille mit einem Beschleunigungsaufnehmer verbunden ist und bei der an der Abstützung der Kokille eine Kraftmeßeinrichtung zur Messung der von der Kokille auf die Abstützung übertragenen Kräfte vorgesehen ist und bei der der Beschleunigungsaufnehmer und die Kraftmeßeinrichtung durch eine elektrisch Subtrahierschaltung verbunden sind. Die Auswertung der Differenz zwischen Antriebskraftsignal und Beschleunigungssignal wird als Maß, für Reibung zwischen Strang und Kokille angesehen. Diese Methode basiert auf der Vorstellung, daß in Summe alle auf die Kokille einwirkenden Kräfte gleich Null sind.

Ebenso, wie aus der EP-A-0 044 291 A1 bekannt, werden auch entsprechend der AT-A-367 328 Beschleunigungssensoren zur Ermittlung der effektiven Kokillenbewegungen eingesetzt.

Der Nachteil beim Stand der Technik besteht im Einsatz von störungsanfälligen Beschleunigungssensoren im Umfeld der aggressiven Umgebung im Bereich der Kokille. Weiterhin wird eine Reibung innerhalb des Antriebs nicht berücksichtigt. Darüber hinaus sind die bekannten Verfahren auf konventionelle Kokillen beschränkt.

Aus DE 27 43 579 C2 ist ein Verfahren zur Steuerung des Stranggießens von Metallen bekannt, bei welchem die Kokille schwingend angetrieben und die Oberfläche des flüssigen Metalls in der Kokille mit einem schützenden Pulver von gegebener Zusammensetzung abgedeckt ist, wobei die Oberfläche des die Kokille verlassenden Stranges zunächst beobachtet und die effektiven Kokillenbewegungen registriert werden und im weiteren im wesentlichen mit einem vorgegebenen Spektrum der effektiven Kokillenbewegungen verglichen wird.

Hierbei wird ein Beschleunigungssensor auf der Kokille der Gießmaschine angebracht und das Beschleunigungssignal in einem nicht näher spezifizierten Datengeber verarbeitet. Es wird dabei davon ausgegangen, daß die Reibung zwischen Strang und Kokille einen Einfluß auf das Frequenzspektrum des Beschleunigungssignals hat. Hierbei bleibt im Unklaren, ob Frequenzanteile der Kokillenbewegung oder des Körperschalls in Bezug zur Reibkraft gesetzt werden.

Nachteil dieses Verfahrens ist die lange Reaktionszeit aufgrund der Frequenzanalyse. Es wird hierbei nur ein zeitlicher Mittelwert ermittelt. Weiterhin wird die Reibkraft nur relativ zum Bereich der Änderung des Frequenzspektrums ermittelt. Darüber hinaus ist der Beschleunigungssensor im Umfeld der aggressiven Umgebung im Bereich der Kokille angeordnet.

Im Unterschied zu den Entgegenhaltungen, die Beschleunigungssensoren zur Ermittlung der effektiven Kokillenbewegungen einsetzen, verfolgt die Erfindung das Ziel, ein Verfahren anzugeben und eine entsprechende Einrichtung zu schaffen, mittels derer ein sicheres Rekonstruieren der Reibkraft zwischen Kokille und Strangschale zu jedem Zeitpunkt des Gießprozesses, mit einfachen, wenig störungsanfälligen Mitteln möglich ist.

Die Erfindung erreicht dieses Ziel durch die kennzeichnenden Merkmale des Verfahrensanspruchs 1 und des Vorrichtungsanspruchs 6.

Erfindungsgemäß werden für die Rekonstruktion der Reibkraft kontinuierlich die Kokillenhubbewegung und die Antriebskraft für die Kokillenhubbewegung gemessen.

Diese Messung wird in einer speziellen Rechenschaltung verarbeitet, die als Ergebnis die Reibkraft zwischen Strang und Kokille liefert. Der Entwurf der Rechenschaltung basiert auf einen dynamischen mathematischen Modell der Kokillenhubbewegung. Dabei kann die Hubposition und/oder die Hubgeschwindigkeit der Kokille meßtechnisch erfaßt werden. Wird nur die Hubposition erfaßt, so läßt sich die Hubgeschwindigkeit rekonstruieren. Gleiches gilt bei der meßtechnischen Erfassung der Hubgeschwindigkeit, bei der dann die Hubposition rekonstruiert wird.

Im Gegensatz zum bekannten Stand der Technik, bei dem nur ein zeitlicher Mittelwert ermittelt wurde, wird bei dem vorgeschlagenen Verfahren der Vertauf der Reibkraft über der Kokillenhubbewegung erfaßt. Die Reibkraft wird dabei als absolute Größe ermittelt, also nicht nur relativ zum Bereich der Änderung des Frequenzspektrums.

Ein besonderer Vorteil des vorgeschlagenen Verfahrens besteht darin, daß für jeden Oszillationszustand, d.h. für jede Oszillationsfrequenz und -Amplitude, die Antriebskraft nicht im Leerlaufbetrieb im voraus bekannt sein muß.

Ein weiterer Vorteil besteht darin, daß im vorgeschlagenen Verfahren Federkräfte berücksichtigt werden. Dies gilt insbesondere für Resonanzkokillen, nämlich Kokillen, die in Federpaketen gelagert sind. Im Falle einer Gelenkhebelführung der Kokille wird die gesamte Antriebssteifigkeit berücksichtigt.

Weiterhin wird auf die lineare Reibung der Kokillenlagerung Rücksicht genommen. Bei ausgesprochen reibungsarmer Lagerung der Kokille kann dieser Wert zu Null angesetzt werden.

Die rekonstruierte Reibkraft zwischen der Strangschale und der Kokille wird als Steuergröße einem Aktuator zugeführt. Gleichzeitig kann die Reibkraft als zusätzliche verfahrenstechnische Größe dem Bedienungspersonal zur Anzeige gebracht werden, um hierdurch zusätzliche Informationen über den Stranggießprozeß bereitzustellen.

Durch die On-Line- Ermittlung der Reibkraft wird eine automatische Bewachung möglich insbesondere im Hinblick auf eine Durchbruchfrüherkennung. Hierbei kann rechtzeitig der Trend erkannt werden und ein bevorstehender Durchbruch durch beispielsweisen ein Alarmsignal gemeldet werden. Das Bedienungspersonal kann entweder aufgefordert werden, die Gießgeschwindigkeit zu reduzieren, es kann aber auch eine automatische Rücknahme der Geschwindigkeit durchgeführt werden, um unabhängig von der subjektiven Beurteilung des Alarms durch das Personal, einen Durchbruch zu verhindern.

Darüber hinaus werden weitere Anwendungen des Einsatzes der rekonstruierten Reibkraft zur Prozeßsteuerung und Prozeßüberwachung genannt. Hierzu zählen die automatisierte Gießpulverzufuhr bzw. Schmiermittelzugabe und die Konizitätsanpassung der Schmalseiten bei Verstellkokillen, wobei die Zufuhr von Schmiermittel bei Anstieg der Reibung bzw. die Nachstellung der Schmalseitenkonizität bei annormalen Reibungsverhältnissen in Abhängigkeit der rekonstruierten Reibkraft gesteuert werden.

Mit dem vorgeschlagenen Verfahren läßt sich in einfacher Weise der Zustand der Kokille überwachen. Für alle Verfahren sind Antriebskräfte, Frequenzspektren oder die Systemreibung im Leerlauf Voraussetzung für die weitere Reibkraftuntersuchung. Sind nun Änderungen dieser Basisdaten bei weiteren Messungen im Leerlauf nach einiger Zeit zu erkennen, kann der Betreiber auf Änderungen an seinem mechanischen System Kokille schließen.

Weiterhin lassen sich die Parameter optimieren. Will der Betreiber Variationen des K-Faktors oder insbesondere ganz neue Regelstrategien bei dem hydraulischen Hubantrieb hinsichtlich einer Oberflächen- und Strangfehlervermeidung testen, so hatte er bislang Untersuchungen des fertigen Produktes mit aufwendigen und sehr zeitintensiven Meßreihen durchzuführen. Mit der Reibkraftermittlung wird ihm ein Hilfsmittel für eine erste Abschätzung der Auswirkungen von Parameteränderungen an die Hand gegeben. Ähnliches gilt bei einer Gießpulveranalyse, bei der die Reibkraftermittlung der besseren Gießpulverauswahl dienen kann.

Es ist bekannt, daß die Reibkraft für die Strangqualität und der Strangfehler eine besondere Bedeutung besitzt. Ungenügende Reibverhältnisse, insbesondere in der Abwärtsbewegung, sind für kurze Längsrisse und für unregelmäßige und tiefe Hubmarken verantwortlich. Bei der exakten Kenntnis der Reibkraft werden sich diese Fehler mindern und die Strangqualität verbessern lassen.

Weiterhin ist die Optimierung der Reibkraft eine der wesentlichen Voraussetzungen für schnelleres Gießen.

Ein Beispiel der Erfindung ist in der beiliegenden Zeichnung dargelegt.

Dabei zeigt:

Figur 1 Federmassesystem.

Figur 2 Rechenschaltung basierend auf den Kokillenhub

Figur 3 Rechenschaltung basierend auf der Hubgeschwindigkeit.

Figur 4 Rechenschaltung Kokillenhub und Hubgeschwindigkeit.

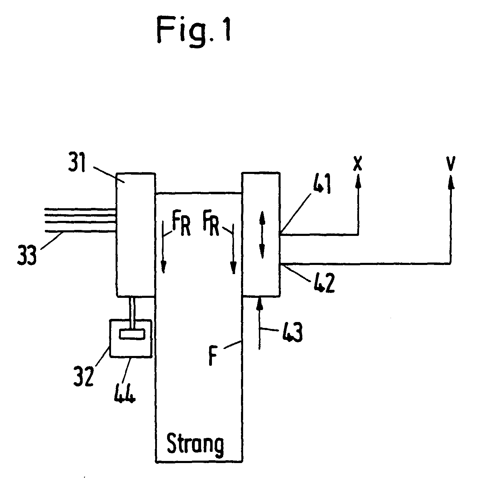

In der Figur 1 ist schematisch eine Kokille 31 dargestellt, die von Federpaketen 33 gehalten und durch einen hydraulischen Antrieb 32 angetrieben wird.

An der Kokille 31 sind Meßelemente einer Meß- und Regeleinrichtung vorgesehen, und zwar für die Position 41, die Geschwindigkeit 42, die Kraft 43 sowie den Druck 44.

Durch dieses Federmassesystem wird die Kokillenhubbewegung beschrieben, wobei eine unbekannte Reibkraft $F_R$ auf die Bewegung der Kokille einwirkt. Es wird die Reibkraft $F_R$, die im wesentlichen die Reibkraft zwischen Strang und Kokille 31 darstellt, rekonstruiert. Die Kokillenhubbewegung wird beaufschlagt durch eine Kraft F, welche die Bewegung der Kokille in Hubrichtung erzeugt. Diese Antriebskraft F steht direkt oder indirekt als meßbare Größe zur Verfügung. Für die Messung der Kraft werden Druckmeßdosen, DMS-Sensoren, Motorströme in elektrischen Antrieben oder Drücke in hydraulischen Antrieben eingesetzt.

Weiterhin ist die meßtechnische Erfassung zur Rekonstruktion der Reibkraft zwischen Strang und Kokille die Kokillenhubamplitude x und/oder die Hubgeschwindigkeit v dargestelt.

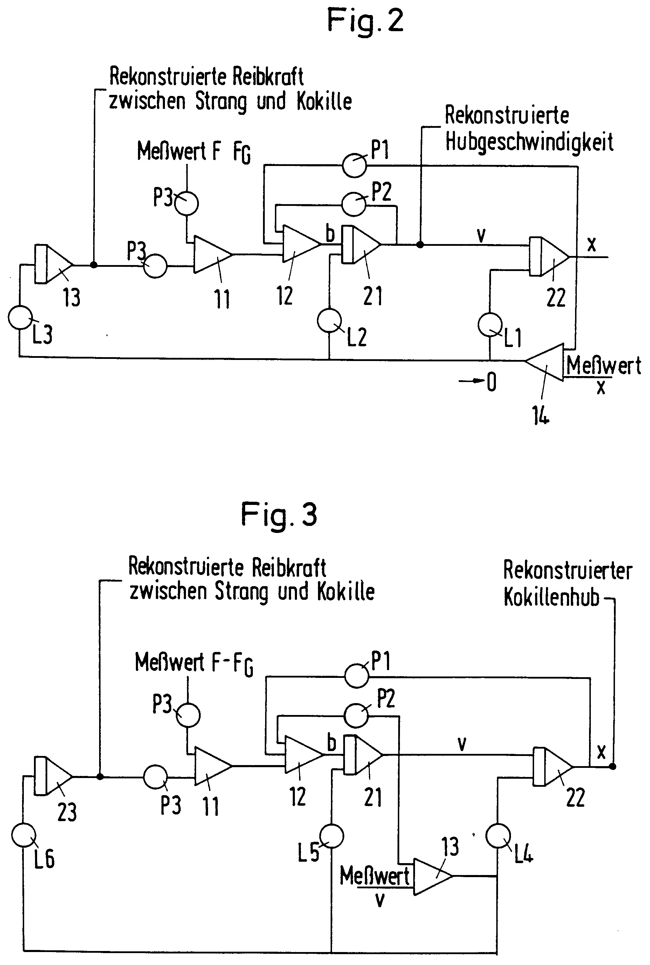

In den Figuren 2 bis 4 sind die Summierer für die Reibkraft $F_R$, die Eigengewichtskraft $F_G$, die Antriebskraft F die Federkraft $F_C = C * x$ (mit C als Gesamtfedersteifigkeit) und die lineare Reibkraft $F_D = D * v$ (mit D als Koeffizienten der linearen Reibkraft) mit der Position 11 bezeichnet. Der Summierer 12 umfaßt die Position x, die Geschwindigkeit v und das Ergebnis des Summieres 11. Der Summierer 13 betrifft die Geschwindigkeit v und der Summierer 14 die Position x.

Weiterhin sind mit den Ziffern 21 bis 22 Integrierer gekennzeichnet und zwar mit 21 bezüglich der Beschleunigung b. mit 22 bezüglich der Geschwindigkeit v und mit 23 bezüglich der Position x und der Geschwindigkeit v.

Mit P1 bis P3 sind die Verstärker gekennzeichnet und zwar:

$$P1 = -C/M$$

$$P2 = -D/M$$

$$P = -1/M$$

mit M als gesamtoszillierende Masse, C der Gesamtfedersteifigkeit und D als Koeffizienten der linearen Reibung.

Figur 2 zeigt eine Rechenschaltung für den Fall, daß neben der Antriebskraft F der Kokillenhub als Meßgröße zur Verfügung steht. In diesem Fall wird zur Reibkraft $F_R$ die Hubgeschwindigkeit v rekonstruiert. Die Koeffizienten L1, L2 und L3 dieser Schaltung sind so gewählt, daß eine Differenz zwischen Kokillenhubmeßgröße und Kokillenhubrechengröße zu Null konvergiert.

Die Figur 3 zeigt eine Rechenschaltung für den Fall, daß neben der Antriebskraft F die Hubgeschwindigkeit v als Meßgröße zur Verfügung steht. In diesem Fall wird zusätzlich zur Reibkraft $F_R$ der Kokillenhub x rekonstruiert. Die Koeffizienten L4, L5 und L6 dieser Schaltung sind so gewählt, daß eine Differenz zwischen der Meßgröße und der Rechengröße bezogen auf die Hubgeschwindigkeit` zu Null konvergiert. In Figur 5 ist eine Rechenschaltung dargestellt, bei der neben der Antriebskraft F der Kokillenhub x und die Hubgeschwindigkeit v als Meßgröße zur Verfügung stehen. Die Koeffizienten L1 bis L6 sind so gewählt, daß eine Differenz zwischen Meß- und Rechengröße sowohl für den Kokillenhub x als auch in der Hubgeschwindigkeit v zu Null konvergiert.

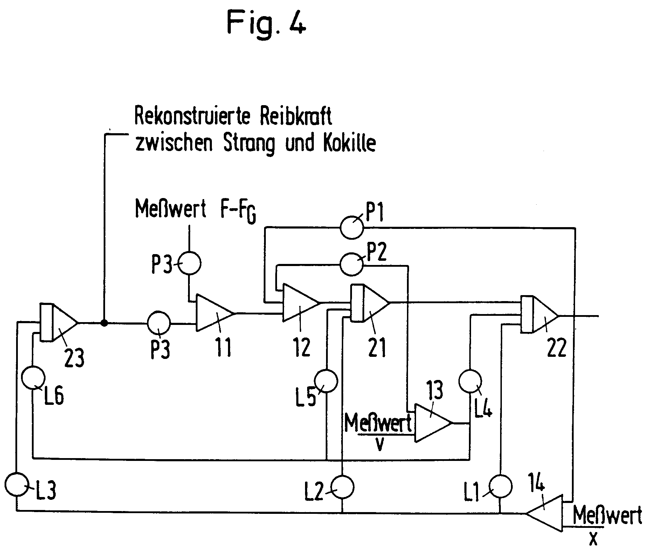

Die in den Figuren 2, 4 und 5 dargestellten Schaltungen stellen lineare, zeitinvariante Differentialgleichungssysteme jeweils dritter Ordnung dar. Mathematisch formuliert werden die Koeffizienten L1, L2 und L3 nach Figur 2, die Koeffizienten L4, L5 und L6 nach Figur 3 sowie die Koeffizienten L1 bis L6 nach Figur 4 in der Art berechnet, daß die Differentialgleichungssysteme vorgegebene negative Eigenwerte aufweisen.

Die Rechenschaltung nach den Figuren 2 bis 4 lassen sich durch analoge, elektrische Schaltungen oder unter Verwendung eines Digitalrechners realisieren. Zur Visualisierung und auch zur Weitergabe der rekonstruierten Reibkraft werden der Momentanwert der Reibkraft und der Mittelwert des gleichgerichteten Momentanwerts der Reibkraft über einen vorgebbaren Zeitintervall verwendet.

Positionsliste

**Summierer**

| 11 | Reibkraft $F_R$, Antriebskraft F, Eigengewichtskraft $F_G$ |
| 12 | Federkraft $F_C$, Dämpfungskraft $F_D$, Ergebnis Summierer 11 |
| 13 | Geschwindigkeit v |
| 14 | Position x |

**Integrierer**

| 21 | Beschleunigung b |
| 22 | Geschwindigkeit v |
| 23 | Position x, Geschwindigkeit v |

**Stranggießeinrichtung**

| 31 | Kokille |
| 32 | Hydraulischer Antrieb |
| 33 | Federpaket |

**Meß- und Regeleinrichtung**

| 41 | Position |
| 42 | Geschwindigkeit |
| 43 | Kraft |
| 44 | Druck |

**Verstärker**

$$P1 = -C/M$$

$$P2 = -D/M$$

$$P3 = -1/M$$

| M | Gesamtoszillierende Masse |
| C | Gesamtfedersteifigkeit |
| D | Koeffizient der linearen Reibung |
| L | Koeffizienten/Verstärker |
| L1 | |
| L2 | |
| L3 | |
| L4 | |
| L5 | |
| L6 | |

**Patentansprüche**

1. Verfahren zum Betreiben einer geführten, vertikal angeordneten Kokille, insbesondere zum Gießen von Stahl, die über eine Hubeinrichtung oszillierend angetrieben wird, wobei

  - die Antriebskraft (F) die Hubposition (x) und/oder die Hubgeschwindigkeit (v) der Kokille meßtechnisch erfaßt werden, in einem Rechenmodell eine Kokillenhubbewegung als Soll-Größe vorgegeben wird,

in einer Schaltungsanordnung die Federkraft (F_C), die lineare Reibungskraft (F_D) und die Differenz aus der um die Eigengewichtskraft (F_G) der Kokille verminderten Antriebskraft (F) und der Reibkraft (F_R) aufsummiert werden, wobei ein Element zur Korrektur des Kokillengewichtes vorgesehen ist, und wobei

in den Folgenschritten eine Integration zur Geschwindigkeit (v) sowie anschließend zur Position (x) erfolgt,

Koeffizienten (L) so gewählt werden, daß die Differenz zwischen den Meßgrößen der Hubposition und/oder der Hubgeschwindigkeit der Kokille und den entsprechenden Rechengrößen Hubposition und/oder Hubgeschwindigkeit der Kokille sowie der Kraft zu Null konvergieren, und

eine Differenz der Kokillenhubbewegung das Maß der Reibkraft (F_R) zwischen der Strangschale und der Kokille darstellend (rekonstruierte Reibkraft) als Steuergröße Aktuatoren zugeführt wird.

2. Verfahren nach Anspruch 1,
dadurch gekennzeichnet,
daß die rekonstruierte Reibkraft visualisiert und registriert wird.

3. Verfahren nach Anspruch 1,
dadurch gekennzeichnet,
daß die rekonstruierte Reibkraft die Gießpulverzufuhr steuert.

4. Verfahren nach Anspruch 1,
dadurch gekennzeichnet,
daß die rekonstruierte Reibkraft die Konizität einer Verstellkokille steuert.

5. Verfahren nach Anspruch 1,
dadurch gekennzeichnet,
daß die Schaltungsanordnungen zeitinvariante Differenzialgleichungssysteme jeweils dritter Ordnung darstellen, die so berechnet werden, daß sie negative Eigenwerte aufweisen, wobei die Schaltungsanordnungen durch analoge elektrische Komponenten oder mittels zeitdiskreter Transformation auf einem Digitalrechner realisiert werden.

6. Stranggießeinrichtung zum Gießen von Stahl, mit einer geführten, vertikal angeordneten Kokille, die durch eine Hubeinrichtung oszillierend angetrieben wird und bei welcher die Antriebskraft (F), die Hubposition (x) und / oder die Hubgeschwindigkeit (v) der Kokille meßtechnisch erfaßt werden, und welche Elemente zum Messen und Regeln der Kokillenhubbewegung aufweist, wobei

ein Integrierer (21) für die Beschleunigung und ein Integrierer (22) für die Geschwindigkeit der Kokille vorgesehen ist,

ein Summierer (14) für die errechneten und die gemessenen Hubpositionen und / oder ein Summierer (13) für die errechnete und die gemessene Hubgeschwindigkeit der Kokille mit einem Integrierer (23) verbunden ist, und

ein Summierer (11) vorgesehen ist, der die über Meßaufnehmer übermittelte um die Eigengewichtskraft verminderte Antriebskraft mit den Daten des Integrierers (23) summiert, und

ein Summierer (12) vorgesehen ist, der eine Federkraft (F_C), eine lineare Reibkraft (F_D) aus der Kokillenlagerung und die Daten aus dem Summierer (11) zur Beschleunigung (b) aufsummiert.

7. Stranggießeinrichtung nach Anspruch 6,
dadurch gekennzeichnet,
daß Kraftsensoren (43) zur Messung der Kraft vorgesehen sind.

8. Stranggießeinrichtung nach Anspruch 6,
dadurch gekennzeichnet,
daß hydraulische Antriebe (32) zum Einsatz kommen, an denen Einrichtungen zur Druckmessung (44) angebracht sind.

9. Stranggießeinrichtung nach Anspruch 6,
dadurch gekennzeichnet,
daß an der Kokille (31) Federpakete (33) zum Führen in Bewegungsrichtung angeordnet sind.

**Claims**

1. Process for operating a guided, vertically disposed mould, in particular for casting steel, which is driven in oscillatory fashion via a lifting device, wherein

- the drive force (F), the lift position (x) and/or the lifting velocity (v) of the mould are detected by measurement techniques,
a mould lifting movement is predetermined as desired quantity in a mathematical model,
- the spring force (F_C), the linear frictional force (F_D) and the difference between the drive force (F), reduced by the dead weight force (F_G) of the mould, and the frictional force (F_R) are added up in a circuit arrangement, wherein an element for correcting the mould weight is provided, and wherein

an integration to velocity (v) and then to position (x) takes place in the following steps, coefficients (L) are selected such that the difference between the measured quantities of the lift position and/or the lifting velocity of the mould and the corresponding operands for the mould lift position and/or lifting velocity as well as the force converge towards zero, and

a difference in the mould lifting movement, representing the extent of the frictional force ($F_R$) between the strand shell and the mould (reconstructed frictional force), is fed as control quantity to actuators.

2. Process according to claim 1,
characterised in that the reconstructed frictional force is displayed and recorded.

3. Process according to claim 1,
characterised in that the reconstructed frictional force controls the casting powder feed.

4. Process according to claim 1,
characterised in that the reconstructed frictional force controls the taper of an adjustable mould.

5. Process according to claim 1,
characterised in that the circuit arrangements represent time-invariant differential equation systems each of the third order, which are calculated such that they exhibit negative eigenvalues, wherein the circuit arrangements are formed by analogue electrical components or by means of discrete-time transformation in a digital computer.

6. Continuous casting device for casting steel, with a guided, vertically disposed mould, which is driven in oscillatory fashion by a lifting device and in which the drive force (F), the lift position (x) and/or the lifting velocity (v) of the mould are detected by measurement techniques, and which comprises elements for measuring and regulating the mould lifting movement, wherein

an integrator (21) is provided for the acceleration and an integrator (22) for the velocity of the mould,
a summer (14) for the calculated and the measured lift positions and/or a summer (13) for the calculated and the measured lifting velocity of the mould is/are connected to an integrator (23), and
a summer (11) is provided which adds the drive force transmitted by transducers, reduced by the dead weight force, to the data of the integrator (23), and
a summer (12) is provided which adds up a spring force ($F_C$), a linear frictional force ($F_D$) from the mould mounting and the data from the summer (11) for the acceleration (b).

7. Continuous casting device according to claim 6, characterised in that force sensors (43) are provided to measure the force.

8. Continuous casting device according to claim 6, characterised in that hydraulic drives (32) are used, on which drives devices (44) for pressure measurement are mounted.

9. Continuous casting device according to claim 6, characterised in that spring assemblies (33) for guidance in the direction of movement are disposed on the mould (31).

**Revendications**

1. Procédé pour mettre en oeuvre une coquille guidée, agencée verticalement, en particulier pour couler de l'acier, qui est entraînée de façon oscillante par l'intermédiaire d'un dispositif de levage, dans lequel :

- la force d'entraînement (F), la position de levage (x) et/ou la vitesse de levage (v) de la coquille sont déterminées par des techniques de mesure,
- un mouvement de levage de la coquille est prédéfini comme valeur de consigne dans un modèle de calcul,
- dans un agencement de circuit, la force élastique ($F_C$), la force de frottement linéaire ($F_D$) et la différence de la force de frottement ($F_R$) et de la force d'entraînement (F) diminuée de la force du poids propre ($F_G$) de la coquille sont totalisées, un élément pour la correction du poids de la coquille étant prévu et, dans les étapes suivantes, une intégration de vitesse (v) ainsi que, ensuite, de position (x) étant effectuée,
- des coefficients (L) sont choisis de sorte que la différence entre les valeurs de mesure de la position de levage et/ou de la vitesse de levage de la coquille et les valeurs de calcul correspondantes de la position de levage et/ou de la vitesse de levage de la coquille ainsi que la force convergent vers zéro, et
- une différence du mouvement de levage de la coquille, représentant (force de frottement reconstruite) la mesure de la force de frottement ($F_R$) entre la coque de la barre et la coquille, étant amenée à des actionneurs comme valeur de commande.

2. Procédé selon la revendication 1,
caractérisé en ce que la force de frottement reconstruite est visualisée et enregistrée.

3. Procédé selon la revendication 1,
caractérisé en ce que la force de frottement reconstruite commande l'amenée de poudre de coulée.

4. Procédé selon la revendication 1, caractérisé en ce que la force de frottement reconstruite commande la conicité d'une coquille de réglage.

5. Procédé selon la revendication 1, caractérisé en ce que les agencements de circuit représentent des systèmes d'équations différentielles à chaque fois du troisième degré invariants dans le temps, qui sont calculés de sorte qu'ils présentent des valeurs propres négatives, les agencements de circuit étant réalisés par des composants électriques analogiques ou par transformation discrète dans le temps dans un calculateur numérique.

6. Dispositif de coulée continue pour couler de l'acier, comportant une coquille guidée, agencée verticalement, qui est entraînée de façon oscillante par un dispositif de levage, et dans lequel la force d'entraînement (F), la position de levage (x) et/ou la vitesse de levage (v) de la coquille sont déterminées par des techniques de mesure, et qui présente des éléments pour mesurer et régler le mouvement de levage de la coquille, un intégrateur (21) pour l'accélération et un intégrateur (22) pour la vitesse de la coquille étant prévus, un additionneur (14) pour les positions de levage mesurées et les positions de levage calculées et/ou un additionneur (13) pour la vitesse de levage mesurée et la vitesse de levage calculée de la coquille étant reliés à un intégrateur (23), et un additionneur (11) étant prévu, lequel totalise la force d'entraînement, diminuée de la force du poids propre, transmise par l'intermédiaire de capteurs de mesure avec les données de l'intégrateur (23), et un additionneur (12) étant prévu qui totalise une force élastique ($F_C$), une force de frottement linéaire ($F_D$) à partir du montage de la coquille et les données de l'additionneur (11) pour l'accélération (b).

7. Dispositif de coulée continue selon la revendication 6, caractérisé en ce que des capteurs de force (43) sont prévus pour mesurer les forces.

8. Dispositif de coulée continue selon la revendication 6, caractérisé en ce que des entraînements hydrauliques (32) sont utilisés auxquels sont appliqués des dispositifs pour la mesure de pression (44).

9. Dispositif de coulée continue selon la revendication 6, caractérisé en ce que des groupes de ressorts (33) sont agencés sur la coquille (31) pour le guidage dans la direction du mouvement.

# Fig.1

# Fig. 2

Rekonstruierte Reibkraft zwischen Strang und Kokille

Meßwert F F$_G$

Rekonstruierte Hubgeschwindigkeit

P3, P3, P1, P2, b, v, x

13, 11, 12, 21, 22

L3, L2, L1

→ 0

Meßwert x

14

# Fig. 3

Rekonstruierte Reibkraft zwischen Strang und Kokille

Rekonstruierter Kokillenhub

Meßwert F - F$_G$

P3, P3, P1, P2, b, v, x

23, 11, 12, 21, 22

L6, L5, 13, L4

Meßwert v

# Fig. 4

Rekonstruierte Reibkraft zwischen Strang und Kokille

Meßwert F-F$_G$